Europäisches Patentamt

European Patent Office

Office européen des brevets

(19)

(11) Publication number: **0 118 604**
A2

(12) # EUROPEAN PATENT APPLICATION

(21) Application number: **83111520.9**

(22) Date of filing: **17.11.83**

(51) Int. Cl.³: **F 41 G 3/26**
**F 41 J 9/00**

(30) Priority: **16.11.82 US 442183**

(43) Date of publication of application:
**19.09.84 Bulletin 84/38**

(84) Designated Contracting States:
**DE FR GB**

(71) Applicant: **BRUNSWICK CORPORATION**
**One Brunswick Plaza**
**Skokie Illinois 60077(US)**

(72) Inventor: **Amour, Sean**
**3237 Minnesota Avenue**
**Costa Mesa California 92626(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Visual target simulator for outdoor field training.

(57) A visual target simulator for field training in which a target image appears to a trainee via a beam-splitter display so as to be superimposed on a "real world" background. The simulator includes a central processing unit coupled to a position sensor system for detecting the orientation of the beam-splitter, to a video disc player containing video images of a target together with information regarding the attitude and trajectory of the target, to a video processing unit for placing the target image at a particular point on the trainee's beam-splitter, to a memory containing data regarding the sector at which images are stored in the video disc player, and to an instructor interface. An instructor can input a target scenario by means of the interface, whereafter the central processing unit accesses the corresponding target images from the video disc based upon data from the memory. The image is displayed to the trainee at a location on the beam-splitter calculated from the display's orientation, the target trajectory and the image size. An audio system is also provided for delivering stereo audio to the trainee indicative of the orientation of the target relative to the trainee to assist in pointing the weapon in the direction of the target image.

./...

Croydon Printing Company Ltd.

**FIG. 2.**

GRÜNECKER, KINKELDEY, STOCKMAIR & PARTNER

PATENTANWÄLTE
EUROPEAN PATENT ATTORNEYS

A. GRUNECKER, DIPL.-ING
DR. H. KINKELDEY, DIPL.-ING
DR. W. STOCKMAIR, DIPL.-ING.AEE ICALTECH
DR. K. SCHUMANN, DIPL.-PHYS
P. H JAKOB, DIPL.-ING
DR. G. BEZOLD, DIPL.-CHEM
W. MEISTER, DIPL.-ING
H. HILGERS, DIPL.-ING
DR. H. MEYER-PLATH, DIPL.-ING

8000 MÜNCHEN 22
MAXIMILIANSTRASSE 58

**0118604**

## VISUAL TARGET SIMULATOR FOR OUTDOOR FIELD TRAINING

The present invention relates to the field of visual target simulators and, more particularly, to simulators in which a trainee views a target image positioned at a computer-controlled location and superimposed against a "real world" background.

The benefits of and need for target simulators which provide training experience under simulated combat conditions has long been recognized in the art. In their earliest forms, such simulators utilized actual equipment, such as planes and tanks, as targets at which trainees fired blank rounds of ammunition. However, the expenses associated with the use of actual targets coupled with the demand for large numbers of systems in order to train large numbers of troops, soon rendered such training programs unfeasible.

As the simulator art developed, simulators were provided in which a trainee responds to a target and background scene that is projected on an overhead dome or other suitable screen.  The projected images may result from films or video tapes of actual targets and background scenes or, in more technically advanced systems, may comprise computer-generated images.  In either case, however, the provision of such simulators for training large numbers of troops has proven to be extremely expensive and, thus, undesirable.  Furthermore, such simulators require a large amount of space and cannot be easily moved from one location to another.

The use of computer-generated images has allowed for training systems of a type similar to arcade video games, in which a trainee operates a control board in an effort to destroy computer-generated targets.  While such systems are less expensive and more portable than the projection-type systems, it is unrealistic to expect a soldier trained  in an air-conditioned classroom with little or no training under adverse field conditions to confidently engage a threat on the first attempt in an actual battlefield.

Accordingly, there exists a clear need for a visual target simulator that is relatively portable and low in cost, whilst at the same time providing highly realistic moving targets for field training of soldiers.

It is therefore an object of the present invention to realistically simulate battle conditions in a low cost, portable device.

It is also an object of the present invention to develop a target image viewed by a trainee against a real world background.

Another object of the present invention is to control the position at which the target image appears to the trainee in response to the direction of the trainee's line-of-sight and a trajectory associated with the target.

Additional objects and advantages of the present invention will be set forth in part in the description which follows and in part will be obvious from that description or may be learnt by practise of the invention. The objects and advantages of the invention may be realized and obtained by the apparatus particularly pointed out in the appended claims.

The present invention overcomes the problems of the prior art and achieves the objects listed above by using the real world as a background scene against which a target is displayed to the trainee. An instructor-selected threat scenario is input to the simulator, which causes the target image to appear on a beam splitter display observed by the trainee. In so doing, the trainee's line-of-sight is detected and input to a central processing unit which effects control over the beam splitter display so as to cause the target image to appear at a particular point responsive to the direction in which the trainee is looking and to the trajectory associated with the target.

To achieve the objects and in accordance with the purpose of the invention, as embodied and as broadly described herein, a visual target simulator delivering to a test subject a target image superimposed against a real world background comprises: a central processing unit; means coupled to the central processing for generating target information signals; means coupled to the central processing unit and to the generating means for producing target driving signals in response to the target information signals; means responsive to the target driving signals for displaying the target image superimposed against the real world, the target driving signals causing the target image to appear at a specific location within the display means; and means coupled to the central processing unit for sensing the position of the display means relative a fixed reference, the central processing unit controlling the producing means such that the specific location at which the target image appears within the displaying means is responsive to the sensed position of the displaying means.

The accompanying drawings, which are incorporated in and constitute a part of this specification, illustrate one embodiment of the invention and, together with the description, explain the principals of the invention.

Fig. 1 illustrates a field installation utilizing a visual target simulator for outdoor field training in accordance with the present invention;

Fig. 2 is a block diagram of the visual target simulator of the present invention;

Fig. 3 is a circuit diagram of the video processing unit of the simulator of Fig. 2;

Figs. 4 A-C illustrate a weapon mounted beam splitting display and reticle of the simulator of Fig. 2;

Fig. 5 is a cross-sectional view showing a helmet mounted beam splitting display of the simulator of Fig. 2;

Fig. 6 is a circuit diagram of the position sensing system of the simulator of Fig. 2; and

Fig. 7 illustrates the arrangement for positioning the receivers of the position sensing system of the simulator of Fig. 2.

Reference will now be made in detail to a presently preferred embodiment of the invention, an example of which is illustrated in the accompanying drawings.

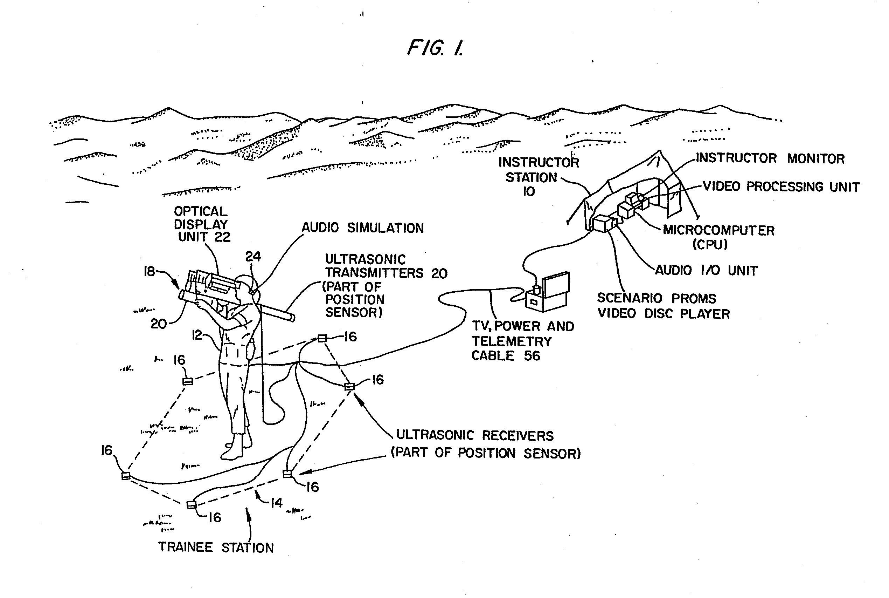

To more clearly understand the operation of the present invention, reference is first made to Fig. 1 which shows a field installation of a visual target simulator in accordance with the invention. The simulator involves an instructor (not shown) situated at an instructor station 10, and a trainee 12 located at a trainee station generally designated by reference character 14. Trainee station 14 includes a plurality of receivers 16 which are part of a position sensing system. Trainee 12 mans a weapon 18 provided with at least two transmitters 20 in communication with receivers 16. Weapon 18 has mounted thereon an optical beam splitting display unit 22 aligned with the boresight of weapon 18. The trainee is also provided with stereo headphones 24 which deliver audio signals indicative of the position of the target.

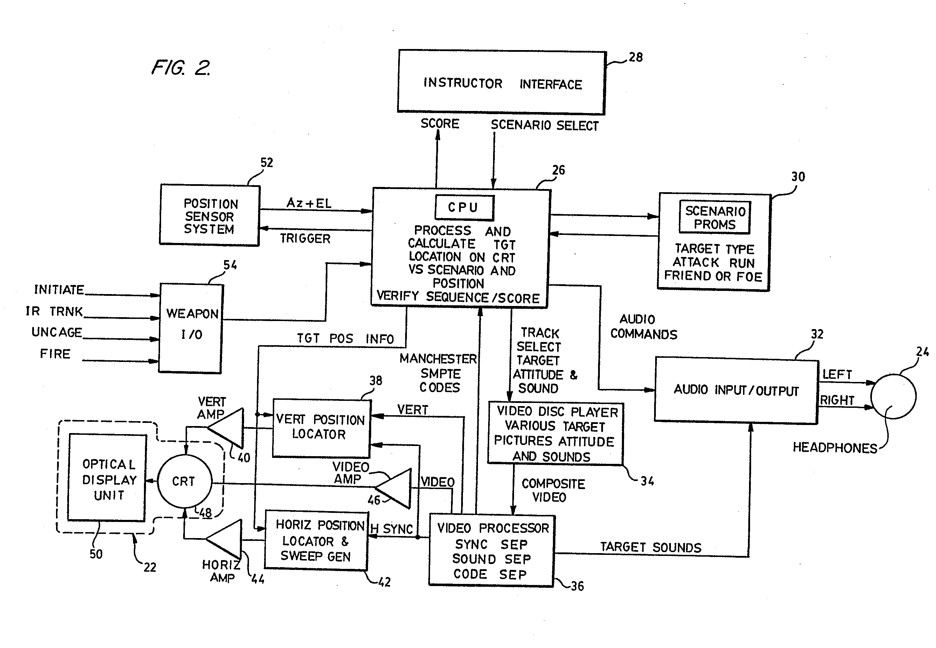

Coupled to the foregoing equipment is control equipment which, as illustrated in Fig. 1, is located at instructor station 10. The specific equipment located at instructor station 10 will be described in further detail hereinbelow with reference to Figs. 2-7. For purposes of the present discussion, it is sufficient to appreciate that this equipment delivers and receives signals to and from the trainee's display 22 and headphones 24, and position sensing system equipment 16 and 20.

The principle of operation underlying the visual target simulator of the present invention is to place a target image on the beam splitting display 22 of the trainee 12 such that the target image is viewed against the real world background. In order to ascertain the position at which the image appears on display 22, information regarding the trainee's line-of-sight is derived by means of transmitters 20 in communication with receivers 16. Thus, positioning of the target image on display 22 responds to the orientation of display 22, as detected by the position receivers and transmitters, such that if the trainee has not pointed weapon 18 and is not looking in the appropriate direction, the target does not appear whatsoever on display 22. If the trainee looks in the appropriate direction, however, the target appears in a corresponding location within display 22 and the trainee must then track the target in order to keep it within display 22. In this manner, the trainee is presented with a target having a controlled path which the trainee must follow, as in actual battle conditions, in order to keep the target within his field of view. Audio provided to the trainee via stereo headphones 24 is also controlled so as to reflect the position of the target relative the trainee and thereby provide additional information to the trainee regarding the location of the target.

Keeping in mind the foregoing introductory discussion of the features of the subject visual target simulator, the present invention will now be described in detail with reference to Fig. 2, which is a block diagram of the system. It is noted that the same reference character numbers are used to denote like elements appearing throughout Figs. 1-7.

According to the present invention, a visual target simulator includes a central processing unit. As embodied herein, the central processing unit (CPU), indicated by reference character 26 in Fig. 2, may comprise a micro-computer such as the Motorola 68000. This is an example of a digital processing unit capable of responding to signals input by various apparati and, in turn, effecting control over other devices.

In accordance with the present invention, a visual target simulator has means coupled to the central processing unit for generating target information signals. As embodied herein, the target information signal generating means includes an instructor interface 28, scenario memories 30, audio input/output circuitry 32 and a video disc player 34. These elements are all coupled to CPU 26 by conductors suitable for exchanging signals therewith.

Instructor interface 28 allows for manually introducing system commands to CPU 26. These commands relate to information such as the type of target which is to appear to the trainee, the path or trajectory of the target, whether the target is a friend or foe, etc. Accordingly, interface 28 may include a keyboard to be used by an instructor for typing in information relating to the foregoing items.  Alternately, interface 28 may include a number of pushbutton switches, each switch dedicated to a different function so that by operating a combination of switches, the instructor assembles commands which are delivered to the CPU.  In addition, CPU 26 delivers signals to instructor interface 28 which represent, for example, information regarding the scoring of hits on targets achieved by the trainee.  This information may be displayed to the instructor by a digital readout, such as a light emitting diode arrangement, or other suitable display means.

Scenario memories 30 store information which is used by the CPU in selecting data from video disc player 34. Memories 30 may be any suitable non-volatile memory device, and may comprise read only memories (ROM's), programmable read only memories (PROM's) or electronically erasable programmable read only memories (EEPROM's), or other memory devices.

Audio input/output circuitry 32 is used to develop the audio signals delivered to trainee 12 via stereo headphones 24.  Audio I/O 32 receives control signals from CPU 2 6 and target sounds derived from signals stored in video disc player 34.  These target sounds may comprise, for example, engine sounds for helicopters, jet aircraft, tank sounds, or whatever other sounds accurately correlate to the target that is to appear to the trainee.  The audio commands from CPU 26 serve to adjust the amplitude of the audio delivered to the left and right portions of headphones 24 so as to present to the trainee audio information pertaining to the location of the target relative the trainee.  In one embodiment, audio I/O circuitry 32 may include variable gain amplifiers, each having as an input the target sounds, with an output of one amplifier coupled to drive the left speaker of headphones 24 and the output of the other amplifier coupled to drive the right speaker of headphones 24. Audio commands produced by CPU 26 are decoded and used to control the gain of the two amplifiers so as to achieve the desired stereo audio in headphones 24. The circuits comprising these devices are well-known in the art and thus do not require further discussion in connection with the present invention.

Video disc player 34 contains information corresponding to video images of the target, as well as other information pertaining thereto, such as information regarding the attitude and size of the target image, its trajectory, the sounds associated therewith, the type of target, and the like. This additional information is stored together with each frame of video by means of Manchester or SMPTE (Society of Motion Pictures and Television Engineers) codes which are well-known in the art. The video information stored in disc player 34 is derived from film footage or video pictures of actual targets, such as aircraft and tanks, or from models thereof. The video information is broken down frame-by-frame and stored in the disc player 34, together with the additional information referred to above. Thus, video disc player 34 functions in a well-known manner as a memory device which is selectively addressable via information generated by CPU 26. Although a video disc player is illustrated in the presently preferred embodiment, it should be appreciated that any other means for storing of video and informational signals, such as a video tape player, can be used in accordance with the present invention.

According to the present invention, the visual target simulator has means coupled to the CPU and to the target information signal generating means for producing target driving signals. As embodied herein, the target driving signal producing means include a video processor 36, a vertical position locator 38, a vertical amplifier 40, a horizontal position locator 42, a horizontal amplifier 44, and a video amplifier 46. As shown in Fig. 2, video processor 36 receives composite video signals from disc player 34, signals which include video signals corresponding to the target as well as signals relating to the sound, position and trajectory of the target. Video processor 36 includes circuitry for converting the composite signal into its components so as to develop a video signal delivered to video amplifier 46, vertical sync signals delivered to vertical position locator 38, horizontal sync signals delivered to horizontal position locator 42, Manchester/SMPTE code signals delivered to CPU 26, and target audio signals delivered to audio I/O 32.

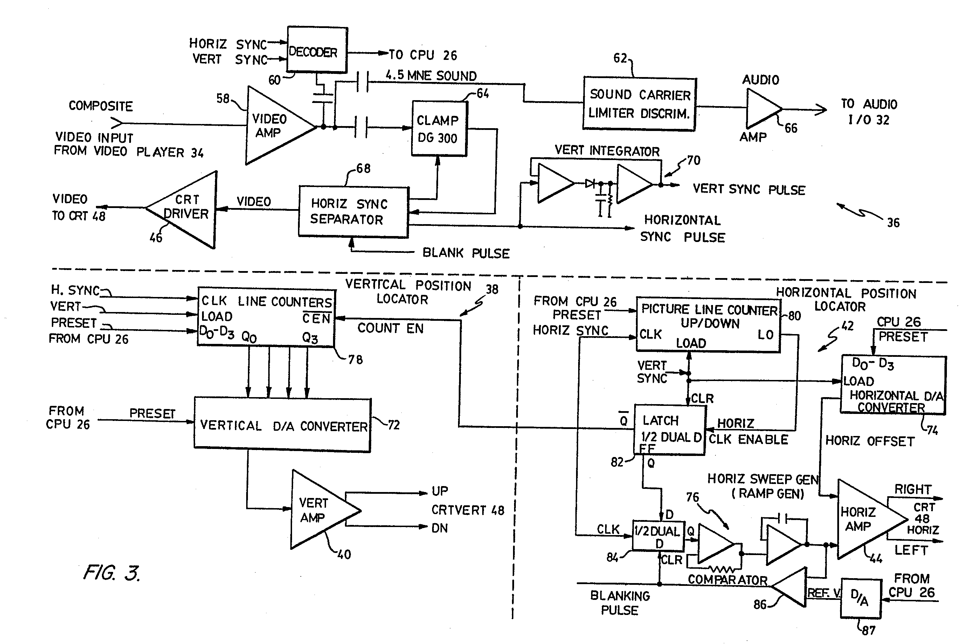

As noted above, the Manchester/SMPTE code signals delivered to the CPU provide information regarding the attitude and trajectory of the target. These signals, together with the positional information derived from the trainee's position sensing system which is described in further detail hereinbelow, are utilized by CPU 26 to place the target image at a particular point in the trainee's beam splitting display. Accordingly, CPU 26 delivers target position information to vertical position locator 38 and horizontal position locator 42 so that the signals developed by each locator 38 and 42 causes the target image to appear at a particular point on the beam splitting display. The mechanics of this operation are discussed in further detail hereinbelow with respect to Fig. 3. For purposes of the present discussion, it is sufficient to understand that locators 38 and 42 are controlled by the target position information from CPU 26 and the sync signals from video processor 36 such that the target image appears at a specified point in the beam-splitting display.

In accordance with the present invention, the visual target simulator has means responsive to the target driving signals for displaying the target image superimposed against the real world. As embodied herein, the displaying means includes an optical display unit 22 having a cathode ray tube (CRT) 48 coupled to a beam splitting optical display unit 50. The deflection plates of CRT 48 are driven by the beam positioning signals output by vertical amplifier 40 and horizontal amplifier 44, while the image is derived from the video information output by video amplifier 46. In response to these signals, CRT 48 causes the target images to appear to trainee 12 on a beam splitting display 22 such that the trainee views the target image against the real world background as seen through the beam splitter.

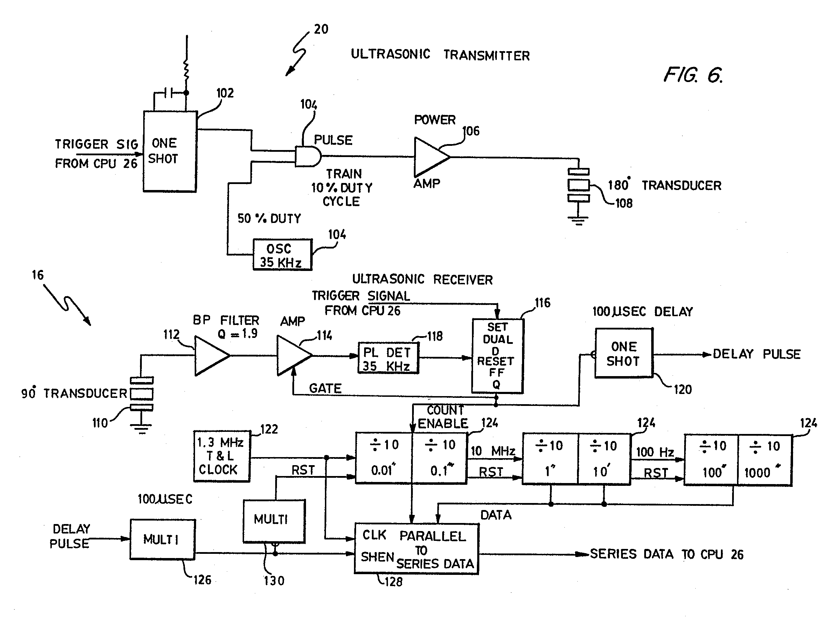

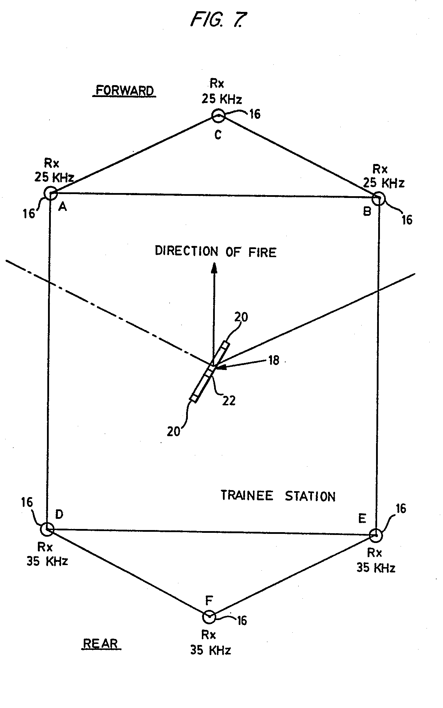

According to the present invention, the visual target simulator has means coupled to the central processing unit for sensing the position of the displaying means relative a fixed reference. As embodied herein, the position sensing means includes a position sensor 52 which comprises receivers 16 and transmitters 20, as noted in Fig. 1. Position sensor system 52 delivers to CPU 26 signals which are decoded by the CPU to derive azimuth and elevational positional information as to optical display unit 22. The signals so delivered are in response to a trigger signal from CPU 26 which controls both receivers 16 and transmitters 20. A detailed circuit diagram of a presently preferred embodiment of position sensor system 52 is illustrated in Figs. 6 and 7, and discussed in further detail hereinbelow, but it is to be understood that any circuitry may be used as position sensor system 52 which is capable of developing signals from which azimuth and elevational information pertaining to display unit 22 may be derived.

Also connected to CPU 26 is a weapon input/output device 54. Thus, operation of weapon 18 by the trainee, such as his initiating the weapon's tracking procedures, firing of the weapon, and the like, may be delivered as informational signals to CPU 26. These signals are subsequently utilized by the CPU to develop scoring information given to the instructor via interface 28. Circuits for implementing weapon I/O 54 are well-known in the art and need no further explanation for purposes of the present invention.

The operation of a visual target simulator for outdoor training according to the present invention will now be described in detail with reference to Figs. 1 and 2. At the outset, it is noted that the video disc player 34 contains information corresponding to images of a target going through various maneuvers with positional, attitude and audio information being stored in the form of Manchester or SMPTE codes in each frame. In the case of a target comprising an enemy aircraft, for example, the information stored in video disc player 34 may consist of pictures of the aircraft going through different flight paths, such as a dive from the left, a dive from the right, level flight, an evasive maneuver, a loop, or the like with digital information regarding the position, attitude and audio of the target in each frame also being stored. Furthermore, at the outset information is also stored in scenario memories 30 pertaining to the sector location at which various targets are stored in disc player 34, as well as information concerning the Manchester/SMPTE codes associated with each type of trajectory.

In operating the system, the instructor first decides upon the scenario which is to be presented to the trainee. In the example of an enemy aircraft noted above, the instructor may desire the aircraft to execute a dive from the left, followed by a forward loop and then assume a level flight path from the trainee's left to right. The instructor would input via interface 28 commands identifying the desired target trajectory. These commands are delivered to CPU 26 and used by the CPU to address data locations in scenario memories 30. In response, scenario memories 30 output data corresponding to the particular sector of video disc player 34 at which the desired trajectories may be located, and the Manchester/SMPTE codes associated with the target's trajectory and type of target. In the instant example, three different trajectory components are to be executed by the aircraft: a dive from left to right, a forward loop and level flight. Thus scenario memories 30, after being addressed with commands relating to these three components, output data identifying the sectors of video disc player 34 at which these three trajectories are recorded, as well as the Manchester/SMPTE codes associated therewith. Thus, it should be appreciated that a visual target simulator according to the present invention may develop a target trajectory from a composite of individual trajectories or even individual pictures of the target without the need for first having recorded an overall trajectory identical to that requested by the instructor.

Using the information delivered by scenario memories 30, CPU 26 addresses the appropriate sectors of video disc player 34 in the desired order. In the above example, the first sector addressed would be that at which information corresponding to a plane diving from left to right is recorded. The composite video stored at this sector is output by disc player 34 to video processor 36, which decodes the composite signal to develop the video signal, target sounds and Manchester/SMPTE codes. The latter signals are delivered to CPU 26 by video processor 36, and are compared with the Manchester/SMPTE codes produced by scenario memories 30 corresponding to the requested trajectory and target type. If a comparison of the stored codes and detected codes indicates the target trajectory and type which has been accessed from the video disc is not the same as that requested, the CPU recognizes that an error has been made and blanks the display so that an incorrect target or trajectory thereof cannot appear to the trainee. On the other hand, if a comparison of these two codes indicates that the correct trajectory and target has been accessed from the video disc player, the display 22 is unblanked so that the target image and its trajectory may be displayed to the trainee. It is noted that a similar comparison will be made by the CPU for each of the other component trajectories requested by the instructor, namely, the forward loop and level flight.

As noted above, if the comparison by the CPU of information stored in scenario proms 30 shows it to be identical to the information accessed from the video disc player 34 via video processor 36, the target image will appear on the trainee's display 22, presuming the trainee's line-of-sight places the image within his field of view. To determine this, CPU 26 examines the information developed by postion sensor system 52 corresponding to the trainee's line-of-sight and, hence, the field of view contained within display 22. If examination of the trainee's line-of-sight reveals that the target is not within his field of view, then display 22 is blanked by CPU 26, although the CPU still causes stereo audio information to be delivered to the trainee by audio I/O 32 and headphones 24 so as to give the trainee a sense of the direction from which the target is "approaching". Once the trainee turns in the proper direction so as to bring the target within the field of view of his display 22, as detected by position sensor system 52, the CPU unblanks the display and allows the target image to appear thereon. The precise position at which the target image appears on display 22 is controlled by CPU 26 based on the information derived from the Manchester/SMPTE codes corresponding to the target attitude and on the information derived from the position sensor system 52 corresponding to the trainee's line-of-sight. For example, if the trainee is looking directly at the target, CPU 26 controls vertical position locator 38 and horizontal position locator 42 such that the target image appears directly in the trainee's line-of-sight, i.e., in the center of the field of view contained by the display 22. As long as the trainee continues to move weapon 18 so that his line-of-sight as projected through the center of the weapon-mounted display 22 is squarely on the target image, the CPU will continue to cause the image to appear in the center of the display. If the trainee should stop moving the weapon and his line-of-sight shifts towards the left of the aircraft, CPU 26 causes position locators 38 and 42 to develop the target image to the right of center of display 22. In the foregoing manner, CPU 26 controls position locators 38 and 42 in response to the information derived from position sensor system 52 and video processor 36 so that the target image appears at a point on the trainee's display 22 indicative of both the preprogrammed target position and the trainee's instantaneous line-of-sight position.

CPU 26 also controls audio I/O 32 so as to vary the signals delivered to the trainee on headphones 24 so that the trainee's sense of location of the target, as detected by his hearing, corresponds with the position of the target indicated on display 22. In the example where the trainee has placed the target directly in his line-of-sight, the audio delivered to both ears is of equal amplitude. Once the trainee's line-of-sight shifts to the left or right of the target position, CPU 26 controls audio I/O 32 such that the left or right amplitude increases or decreases, respectively.

From the foregoing, it may be appreciated that a visual target simulator according to the present invention causes a video picture of a target to be displayed to a trainee against a real world background. The position at which the target appears to the trainee is computer controlled in response to the position of the display, as detected by the position sensor system, and to the target position, which is stored on the video disc player and verified by the information stored in the scenario memories. The target trajectory is selected by the instructor and may consist of a variety of different trajectories, the overall trajectory being composed from components stored at various sectors in the video disc player. The sector at which each component trajectory is stored is derived from the scenario memories based upon the commands input to the CPU via the instructor interface.

In order to judge the perfomance of the trainee, the trainee's control over the various elements of the weapon are delivered to CPU 26 via weapon I/O 54. For example, firing the weapon by the trainee causes a signal developed on the "fire" control line, as shown in Fig. 2, to be delivered to CPU 26 via weapon I/O 54. By comparing the position of the target at the time of firing with the position of the weapon, as detected by position sensor system 52 which is aligned with the boresight of the weapon, the CPU can determine whether a "hit" occurred. Thus, information regarding scoring may be computed and delivered to the instructor via instructor interface 28. To assist the instructor in judging the abilities of the trainee, the instructor's station may be provided with a video display (not shown) which is driven by the same signals driving the trainee's display 22. Thus, the instructor may see the target as seen by the trainee, although the instructor would not see the real world background since the instructor's display would be a non-beam splitting device. The instructor's display may also be provided with a reticle corresponding to aiming of the weapon, so that by viewing the position of the target image relative the aiming reticle at the time of firing of the weapon, the instructor can observe the trainee's accuracy of fire.

As shown in Fig. 1, the various elements of the visual target simulator of the present invention may be coupled to each other by means of a multi-conductor cable 56. In a presently preferred embodiment, the control electronics shown in Fig. 2 are housed in a unit located in instructor station 10 with only the position receivers 16 and transmitters 20, the display 22, headphones 24 and weapon I/O 54 (not shown in Fig. 1) being remote therefrom. For ease of portability, the relative positions of the foregoing may be rearranged in any desired manner without departing from the scope or spirit of the present invention.

Details of specific circuits comprising elements of a presently preferred embodiments of the invention will now be discussed with reference to Figs. 3-7. Referring first to Fig. 3, a circuit is illustrated for the video processor 36, vertical position locator 38 and horizontal position locator 42 of the target driving signal producing means. The circuitry for video processor 36 is shown in the upper portion of Fig. 3, above the dotted lines. The circuitry is well-known in the art of television and video display units, and finds common usage in television receivers for developing vertical and horizontal sync pulses, as well as audio, from a composite video input signal. The decoder for developing the Manchester/SMPTE codes shown in the upper left-hand portion of Fig. 3 is not standard in conventional television receivers, however, and will be explained in further detail hereinbelow.

Video processor 36 is connected to video disc player 34 which delivers composite video input signals to a video amplifier 58. The output of video amplifier 58 is delivered to a Manchester/SMPTE decoder 60, a sound carrier/limiter discriminator 62, and a clamping circuit 64. The sound carrier/limiter discriminator 62 is coupled to an audio amplifier 66 so as to develop target sounds delivered to audio I/O 32. Signals output by clamping circuit 64 are processed by a horizontal sync separator 68 to develop horizontal sync pulses and by a vertical integrator 70 to develop vertical sync pulses. The video signal, with the vertical and horizontal sync pulses having been removed, is delivered by horizontal sync separator 68 to video amplifier/CRT driver 46. The video signals delivered to CRT 48 may be blanked entirely so that no image is produced by the CRT by means of a blanking pulse which is input to horizontal sync separator 68; the blanking pulse and circuit for developing it are described in further detail hereinbelow. All the foregoing circuits are well-known in the art, and require no further explanation for an understanding of the present invention.

In order to extract the Manchester/SMPTE code from the composite video signal, a decoder 60 is coupled to receive the horizontal sync and vertical sync signals as well as the signal output by video amplifier 58.

Decoder 60 extracts the Manchester/SMPTE codes which are stored in each frame of the video signal, the individual frames being identified to the decoder by means of the horizontal and vertical sync input signals. The output of decoder 60 is delivered to CPU 26 and, depending upon the types of inputs accepted by CPU 26, may comprise a stream of serial data or may comprise parallel data presented simultaneously on a plurality of input terminals. Circuits for extracting digital signals of the type used in decoder 60 are also well-known in the art.

Vertical position locator 38 is illustrated at the bottom left-hand portion of Fig. 3, with horizontal position locator 42 illustrated at the bottom right-hand portion. In order to understand the operation of these circuits, it is important to keep in mind that the purpose thereof is to locate the target image at a specific position on the beam-splitting display corresponding to the trainee's field of view and the position of the target. The image of the target is derived from an actual video picture of the target in which the target is positioned proximate the upper left-hand corner of the picture. This corner corresponds to an origin point which is used by the central processing unit in moving the target image about the display. For convenience, this origin point can be thought of as line 0, pixel 0 in a display having up to 525 vertical lines and 525 horizontal pixels.

The size of the target image will vary according to the proximity of the target relative the camera which recorded the target image. For targets far away, the image is relatively small, but increases as the target gets nearer to the camera. Thus, an extremely distant target may occupy a screen size of only 30 lines by 30 pixels whereas a target which is fairly close may occupy a screen size of 400 lines by 400 pixels. The screen size of the target is one of the pieces of information stored in the Manchester/SMPTE codes associated with each frame. The information is used in generating the target image on the trainee's display, as will now be described in detail with reference to Fig. 3.

Acting in response to positional information regarding the trainee's line-of-sight, as provided by the position sensor system and to the position of the target, as provided by the Manchester/SMPTE codes, CPU 26 determines at what point on the trainee's beam-splitting display the target image is to appear. In so doing, the CPU determines the position on the beam-splitting display where the origin point of the screen containing the target image is to be positioned, as well as the size of the target image. For example, in the case where the trainee's line-of-sight is directly below the target, the image is positioned so as to appear at the top center of the beam-splitting screen. For a distant target having a small screen size associated therewith, it may be appropriate to have the origin point of the target screen positioned at line 0, pixel 230 out of a 525 x 525 screen, with a target size of 60 lines by 60 pixels. For a target very close and having a large screen size, the origin point might be moved to line 0, pixel 100, the target size being 320 lines by 320 pixels. The CPU positions the target image on the trainee's beam-splitting display by controlling the vertical and horizontal position locators such that the origin point of the target image is moved to the appropriate position on the beam-splitting diplay, taking into account the position of the beam-splitting display, the position of the target and the size of the target image.

To accomplish this function, CPU 26 outputs signals used by the vertical and horizontal position locators to cause a controlled deflection in the vertical and horizontal screens of the CRT and to load counters with information as to the size of the target image, following which the the CRT displays the image of the target. The counters containing the size information are utilized for blanking the trainee's display as soon as the target image has been produced, thereby avoiding the possibility of displaying any extraneous matter or degrading the trainee's view of the real world background as seen through the beam-splitter. In vertical position locator 38, the positioning signals from the CPU are presented to preset inputs of a vertical digital-to-analogue converter 72 having the analogue output thereof coupled to drive the CRT vertical deflection plates via vertical amplifier 40. By loading in a position signal from CPU 26, a corresponding analogue signal is developed, causing vertical deflection in CRT 48 to the vertical position at which the origin point of the target image is to be placed.

In a similar fashion, the horizontal deflection plates of the CRT are controlled in response to a position signal delivered by CPU 26 to the input of a horizontal digital-to-analogue converter 74 having its analogue output connected to the CRT horizontal deflection plates via horizontal amplifer 44. Horizontal amplifier 44 also receives as an input a horizontal sweep signal produced by ramp generator 76, which causes the horizontal deflection plates of CRT 48 to sweep in a horizontal direction when producing the target image.

As set forth above, signals from CPU 26 corresponding to the image size of the target are also input to the vertical and horizontal position locators. In the former, this information is loaded into a counter 78 by the vertical sync pulses, counter 78 being an up/down counter clocked by the horizontal sync pulses with an output coupled to vertical D/A converter 72 so as to change the position of the vertical deflection plates of CRT 48. In the horizontal position locator, the information regarding the horizontal size of the target is loaded into another up/down counter 80 which is also clocked by the horizontal sync pulses. Horizontal position locator 42 also is connected to a latch 82, such as a D-flip flop, connected to picture line counter 80. The Q output of latch 82 is connected to the input of a second latch 84, which may also be a D-flip flop, the output of which is connected to drive ramp generator 76. The Q output of latch 82 is connected to the Count Enable input of line counter 72. The output of ramp generator 76 is connected to horizontal amplifier 44 and to an input of a comparator 86, the other input of which is coupled to a reference voltage developed by a digital-to-analogue converter 87 connected to CPU 26. The output of comparator 86 develops the blanking pulse which is used to blank the trainee's beam-splitting display when desired, the blanking pulse being generated when the ramp generator voltage exceeds the voltage output by the D/A converter 87.

In operation, CPU 26 delivers informational signals which are loaded into vertical and horizontal D/A converters 74 and 76 so as to position, respectively, the vertical and horizontal deflection plates or CRT 48 to the location calculated by the CPU at which the origin point of the target image is to be positioned. Thereafter, the information from the CPU regarding the size of the target image is loaded into counter 78 and 80 and the first line of the image is displayed in conventional manner by sweeping of the CRT horizontal deflection plate via ramp generator 76. During this sweeping action, horizontal sync pulses delivered to picture line counter 80 cause it to count down from the preset input which corresponded to the size of the image. When the end of a horizontal sweep is reached, as detected by counter 80, the rest of the horizontal line is blanked via D/A converter 87 and comparator 86, while vertical line counter 78 is decremented by one count. This causes the next horizontal line to be swept in the same fashion until the count contained in counters 72, 78 and 80 indicates that the full image has been displayed. At this point, a blanking pulse is delivered by comparator 86 which prevents any other images from appearing on the trainee's beam splitting display until such time as the next image of the target is displayed.

It is to be appreciated that the circuitry illustrated in Fig. 3 represents a presently preferred embodiment, and that the desired functions of the circuit set forth above may well be accomplished by different arrangements of elements without departing from the spirit or intent of the present invention.

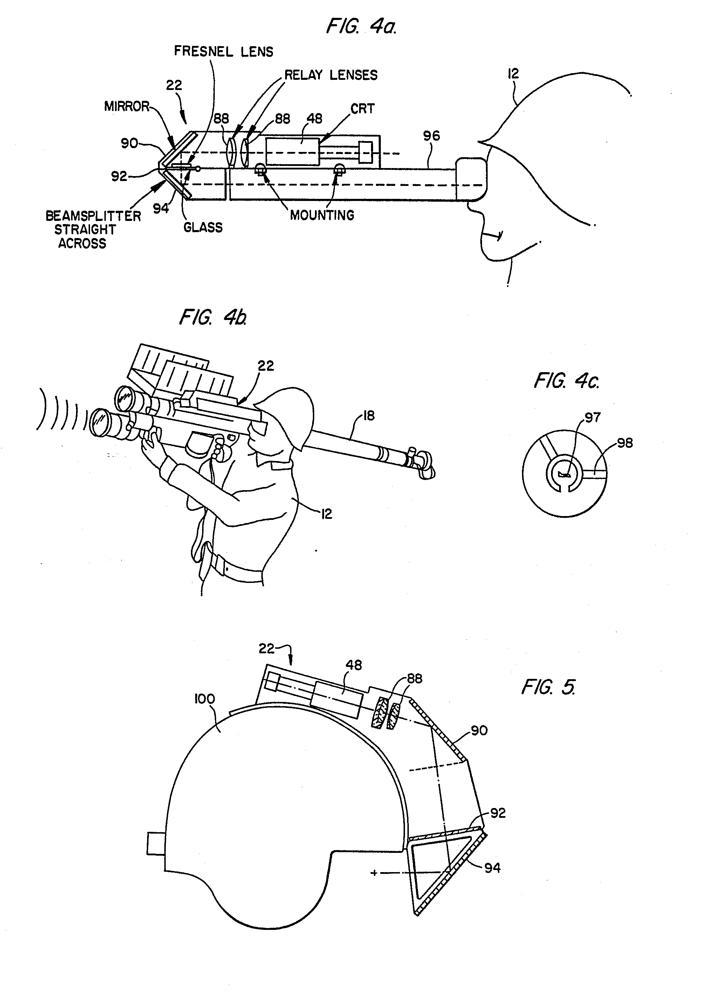

The trainee's beam-splitting display 22 will now be described in detail with reference to Fig. 4 which illustrates a weapon mounted display. Display 22 includes CRT 48 which projects an image adjustable by a set of relay lenses 88 so as to reflect off a mirror 90, through a fresnel lens 92 and onto a beam-splitter 94. By peering through a sighting tube 96, the trainee is able to see an image appearing on beam-splitter 94, as well as to see through beam-splitter 94 to observe the real world as a background on which the target image is superimposed. Relay lenses 88 and CRT 48 are adjusted in a well-known manner so as to collimate the target image, i.e., to place it in focus and appear at infinity to

22                                         0118604

the trainee.  The entire display 22 is well-known in the art of beam-splitters, with the exception of use the introduction of the lens 92 which is used as a lightweight magnifying eyepiece.

Fig. 4b illustrates display unit 22 mounted on weapon 18 which is manned by a trainee 12.  The display is aligned  with the boresight of the weapon and, hence, line-of-sight of the trainee.  This is the same line which connects the two position transmitters 20 that are mounted at the ends of weapon 18 (not shown in Fig. 4). Fig. 4c illustrates a scene appearing to a trainee through the beam splitter in which a target image, in this example an aircraft 97, is positioned in the center of an aiming reticle 98 which is fixed to the sighting tube 96 or formed on the beam-splitter 94.  As set forth above, a video display unit located at the instructor's station may be provided with a similar aiming reticle so that the instructor can see precisely the positioning of target image 97 relative reticle 98 which is being seen by the trainee.

Because the field of view of a weapon mounted display, such as that shown in Fig. 4 is relatively small being on the order of 30-40 degrees, it may be advantageous to provide a helmet mounted display of the type shown in Fig. 5 which has a much larger field of view.  A helmet mounted display comprises a beam-splitter display 22 having the same elements as that set forth above with respect to Fig. 4, although mounted on a helmet 100 worn by a trainee 12 rather than a weapon manned by the trainee. Although CRT 48 projects no greater field of view within which an image can appear than that of the weapon mounted display, a helmet mounted display is advantageous in that the trainee is presented with a wider unobstructed field of view and has greater peripheral vision.  A drawback of such a display, however, is that it is fairly cumbersome for use in connection with aiming a weapon and, thus, a helmet mounted display of the type shown in Fig. 5 may be worn by one trainee assisting in the aiming of a weapon by a second trainee. Such two-man teams are commonly used in operating weapons such as ground-to-air missile launchers.

In order for the target image to appear bright and clear against the real world background under all conditions, especially bright sunlight, CRT 48 must be capable of creating a high brightness display on the order of 1,000 foot- lamberts or greater. In helmet mounted displays, two CRTs may be utilized, each CRT being associated with one of the trainee's eyes in a binocular arrangement. With the advent of small, lightweight CRT's capable of providing ultra-high brightnesses, a helmet mounted display may comprise a single CRT with a prism lens or other arrangement so as to split the projected image to develop binocular images from the single CRT. The use of such alternative displays can be accomplished without departing from the spirit or intent of the present invention.

Position sensor system 52 will now be discussed in detail with reference to Figs. 6 and 7. Turning first to Fig. 6, one of the ultrasonic transmitters 20 is illustrated at the top of the drawing. Transmitter 20 includes a one-shot multivibrator 102 driven by a trigger signal from CPU 26 and by a signal from an oscillator 104. According to a presently preferred embodiment, oscillator 104 generates an ultrasonic signal, such as 35 KHz, having a 50% duty cycle. Each transmitter 20 present in the target simulator system has a unique/frequency associated with it and with its corresponding receivers 16; the only requirement in selecting these frequencies are that the frequency be ultrasonic and one frequency not be harmonically related to any other frequencies being used. The trigger signal from CPU 26 causes a window to be created such that at the output of an AND gate 104 coupled to multivibrator 102, a signal is presented having a 10% duty cycle and

24                                    0118604

characterized by a window containing a burst of approximately 100 pulses at 35 KHz. This signal is delivered to a power amplifier 106 and transmitted via a transducer 108.

The signal transmitted by one of transmitters 20 is received by an ultrasonic receiver 16 of the type shown in the lower portion of Fig. 6. Like transmitter 20, ultrasonic receiver 16 has as an input the same trigger signal from CPU 26 which initiated the transmitted signal. Thus, as the transmitted signal is detected by a receiving transducer 110 coupled to a bandpass filter 112 and a gated amplifier 114, the trigger signal from CPU 26 is input to a flip flop 116 so as to open gated amplifier 114 only upon receipt of a trigger signal. The output of amplifier 114 passes through a detector 118 tuned to the frequency of the corresponding transmitter, in this case 35 KHz, such that the first transmitted pulse detected by the receiver after the trigger signal causes flip flop 116 to turn off gate amplifier 114 and to generate a signal delayed 100 microseconds therefrom via one-shot multivibrator 120. In order to determine the time elapsed between the trigger signal from CPU 26 and the first signal received from transmitter 20, each ultrasonic receiver is provided with a clock 122, tuned to 1.3 MHz in the example shown in Fig. 6, and a chain of counters 124 driven by the clock signal. The counters count up the time elapsed between the trigger signal and the first received pulse. Approximately 100 microseconds later, the delay signal from multivibrator 120 controls a multivibrator 126 which outputs a control pulse to shift the count which was attained in counters 124 into a parallel-to-series converter 128. The output of multivibrator 126 also generates a reset signal delivered to counters 124 via a multivibrator 130 so that counters 124 are reset and in condition to begin counting anew in response to the next trigger pulse. Parallel-to-series converter 128 receives as a clock input the signal from clock 122 so as to deliver the data stored in parallel as a stream of serial data to CPU 26. Although in the presently preferred embodiment the data from counters 124 is delivered serially via converter 128, it is to be appreciated that this data could also be delivered in parallel to the CPU if that is more desirable in view of the particular microprocessor being used as CPU 26.

In order to understand how the position of the display means is ascertained from the use of transmitters 20 and receivers 16, reference is made to Fig. 7 which shows the receivers 16 distributed about a trainee, represented by a weapon 18 having transmitters 20. The forward transmitter 20, in the illustrated example of Fig. 7, is tuned to 25 KHz as are the forward receivers 16. The rear transmitter 20 of the weapon, on the other hand, is tuned to 35 KHz as are the rear receivers 16. The forward receivers are at positions A, B and C, whereas the rear receivers are at positions D, E and F.

To determine the azimuth and elevation of weapon 18 and thus the field of view of contained in the beam-splitting display mounted thereon, forward receivers 16 at positions A-C deliver to CPU 26 information corresponding to the length of time required for a signal to travel from forward transmitter 20 to each of the forward receivers in a manner described above. Similarly, rear receivers 16 at positions D-F deliver to the CPU data regarding the length of time a signal from rear transmitter 20 is required to reach each of the rear receivers. By treating each measured interval of time as corresponding to a hemispherical surface having one of positions A-F at the center thereof, the information from three forward receivers together defines three hemispheres which intersect at a single point, as does the information from the rear receivers. The two points of intersection of each of the three forward and three rear hemispheres define a line having the same azimuth and elevation of weapon 18 and, hence, the field of views of weapon mounted display 22. Accordingly, from the information generated by the ultrasonic receivers and transmitters, the CPU can ascertain the precise position of the field of view of display 22 and control the CRT thereof so that the target image appears at the appropriate position.

It has been found that an ultrasound position sensing system of the type described above works best if the transmitters are spaced apart by a distance of three to four feet. While such spacing is ideal with respect to weapon-mounted transmitters, an ultrasound system may be difficult to implement in a helmet-mounted display of that type shown in Fig. 5. Instead, the position of the helmet-mounted display may be detected by electromagnetic sensor means of a type well-known in the art. One such electromagnetic sensor system suitable for this purpose is manufactured by Polhemus Navigation Sciences, and is the subject of U.S. Patent No. 3,868,565 issued February 25, 1975 to J. Kuipers which is incorporated herein by reference.

It will be apparent to those skilled in the art that target simulator for outdoor training of the present invention. The invention in its broader aspects is, therefore, not limited to the specific details, representative apparatus and illustrative examples shown and described herein. Accordingly, departure may be made from such details without departing from the spirit or scope of applicants' general inventive concepts.

CLAIMS:

1. A visual target simulator delivering to a test subject a target image superimposed against a real world background, comprising:

a central processing unit;

means coupled to said central processing unit for generating target information signals;

means coupled to said central processing unit and to said generating means for producing target driving signals:

means responsive to said target driving signals for displaying the target image superimposed against the real world, said target driving signals causing the target image to appear, at a specific location within said displaying means; and

means coupled to said central processing unit for sensing the position of said displaying means relative a reference, said CPU controlling said producing means such that the specific location at which the target image appears within said displaying means is responsive to the sensed position of said displaying means and the target information signals.

2. A visual target simulator as recited in claim 1 wherein said target information signals generating means includes means controlled by said central processing unit for accessing video information corresponding to said target image.

3. A visual target simulator as recited in claim 2 wherein said stored video information includes data used by said central processing unit for imparting a predetermined trajectory to said target image.

4. A visual target simulator as recited in claim 2 wherein said video information storing means includes a video disc player under control of said central processing unit.

5. A visual target simulator as recited in claim 1 wherein said target information signals generating means includes a memory device addressable by said central processing unit.

6. A visual target simulator as recited in claim 1 wherein said target information signals generating means includes an instructor station having means for manually inputting control signals to said central processing unit.

7. A visual target simulator as recited in claim 1 wherein said target information signals generating means includes means for developing an audio signal delivered to the test subject.

8. A visual target simulator as recited in claim 1 wherein said target driving signals producing means includes means for deriving vertical and horizontal sync signals coupled to drive said displaying means.

9. A visual target simulator as recited in claim 8 wherein said sync signals deriving means is further responsive to positioning signals produced by said central processing unit in response to the position of said displaying means sensed by said sensing means, such that said deriving means position said target image at said specific location within said displaying means in response to said positioning signals.

10. A visual target simulator as recited in claim 9 wherein said central processing unit produces said positioning signals in response to an output of said sensing means and to said target information signals.

11. A visual target simulator as recited in claim 1 wherein said target driving signals producing means includes means for developing a video signal from said target information signals.

12. A visual target simulator as recited in claim 1 wherein said displaying means includes a beam splitting optical display.

13. A visual target simulator as recited in claim 12 wherein said displaying means includes a helmet worn by the test subject and said beam splitting optical display is coupled to said helmet.

14. A visual target simulator as recited in claim 13 wherein the test subject has an unobstructed field of view provided by said helmet-coupled beam splitting optical display.

15. A visual target simulator as recited in claim 13 wherein said position sensing means includes means coupled to the helmet for transmitting a first signal, said first signal being provided to said central processing unit for controlling said target driving signals producing means.

16. A visual target simulator as recited in claim 12 wherein the test subject mans a weapon and said beam splitting optical display is mounted on the weapon.

17. A visual target simulator as recited in claim 16 wherein said position sensing means includes means coupled to the weapon for transmitting a first signal, and means located at predetermined points relative the test subject for receiving said first signal, an output of said receiving means being provided to said central processing unit for controlling said target driving signals producing means.

## FIG. 1.

INSTRUCTOR MONITOR

INSTRUCTOR STATION 10

VIDEO PROCESSING UNIT

MICROCOMPUTER (CPU)

AUDIO I/O UNIT

SCENARIO PROMS VIDEO DISC PLAYER

OPTICAL DISPLAY UNIT 22

AUDIO SIMULATION

ULTRASONIC TRANSMITTERS 20 (PART OF POSITION SENSOR)

TV, POWER AND TELEMETRY CABLE 56

18

24

20

12

16

16

16

16

16

16

16

14

ULTRASONIC RECEIVERS (PART OF POSITION SENSOR)

TRAINEE STATION

FIG. 2.

FIG. 3.

FIG. 4a.

FRESNEL LENS

RELAY LENSES

22

MIRROR

CRT

88 88 48

90

92

94

BEAMSPLITTER
STRAIGHT
ACROSS

GLASS

MOUNTING

96

12

FIG. 4b.

22

18

12

FIG. 4c.

97

98

FIG. 5.

22

48

88

100

90

92

94

FIG. 6.

ULTRASONIC TRANSMITTER

ULTRASONIC RECEIVER

*FIG. 7*

FORWARD

Rx
25 KHz
16
C

Rx
25 KHz
16 A

Rx
25 KHz
B 16

DIRECTION OF FIRE

20

18

22

20

TRAINEE STATION

16 D
Rx
35 KHz

E 16
Rx
35 KHz

F 16
Rx
35 KHz

REAR